# EUROPEAN PATENT APPLICATION

(11) **EP 2 017 604 A2**
(43) Date of publication of application: **21.01.2009**
(21) Application number: 08160158.5
(22) Date of filing: 10.07.2008
(51) Int. Cl.: G01N 21/77

(54) **Apparatus and method for chemical, biological and radiological agent sensing**

(30) Priority: 18.07.2007 US 779550
(71) Applicant: Honeywell International Inc., Morristown NJ 07960 (US)
(72) Inventor: Sanders, Glen A., Scottsdale, AZ 85255 (US); Koehler, David R., Glendale, AZ 85305 (US)
(74) Representative: Buckley, Guy Julian

(57) **Abstract**

Apparatus and method for chemical, biological and radiological agent sensing. The sensing apparatus includes a plurality of resonators each having a resonance frequency and an optical fiber coil. The optical fiber coils have cladding and an indicator embedded in the cladding that reacts to an agent (chemical or biological substance) or a dopant that darkens with radiation. The resonator circulates light through the coil and produces a resonance shape centered at the resonance frequency and measured via the input light. A predetermined change in the resonance shape indicates a presence of the agent in the environment.

## Description

### BACKGROUND OF THE INVENTION

In recent times, greater emphasis has been placed on national home security and detecting threats to populations. In particular, detecting or sensing the presence of undesired chemicals or biological material in the environment has become a priority, and a variety of detection devices have been developed in response thereto. One example of a chemical sensor is a sensor with an optical fiber having a core and a cladding. The cladding, or coating on the cladding, has optical properties which are altered in the presence of a predetermined material to be detected. The light transmitted through the core of the optical fiber is a function of the change in optical properties of the cladding or coating interacting with the material to be detected.

One design consideration for conventional detection devices is with sensitivity. By detecting the presence of lower concentration levels of undesired materials, an appropriate response may be timely performed. For a particular detection device, more time is generally required to detect the presence of undesired materials at lower concentration levels.

Accordingly, it is desirable to provide a sensor for detecting the presence of chemical and/or biological agents with enhanced sensitivity while minimizing the detection time. In addition, it is desirable to provide a sensor for detecting the presence of multiple and different threats while minimizing the package size of the sensor. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

Apparatus and method are provided for sensing one or more agents in an environment. In one exemplary embodiment, an apparatus for sensing one or more agents in an environment includes a waveguide and two or more resonators that can be coupled to the waveguide. The waveguide receives a first light beam and directs the first light beam to one of a number of resonators. Each resonator includes an optical fiber coil and circulates the first light beam through an optical fiber coil, which is coupled to a photdetector. Each resonator contains a coil of fiber, the fiber being sensitive to a known chemical agent. The first resonator contains a first coil fiber that is sensitive to a first chemical agent, likewise for the second. When the first light beam is coupled to the first resonator, the first light beam frequency is scanned across the resonance of a first resonator and a resonance linehsape is detected at the photodetector as result of changes in the circulating light beam within the first resonator. The first circulating light beam is derived from the first light beam by deriving a portion of light from the first light beam and circulating it within the resonator when the frequency of the first light beam is in the frequency-region near the resonance of the resonator which contains the optical fiber coil. A predetermined change in the resonance shape indicates a presence of one of the agents in the environment.

### BRIEF DESCRIPTION OF THE DRAWINGS

Preferred and alternative embodiments of the present invention are described in detail below with reference to the following drawings:

FIGURE 1 is a schematic diagram of a chemical/biological agent sensor in accordance with an exemplary embodiment of the present invention;

FIGURE 2 is a schematic diagram of a chemical/biological agent sensor having a linear resonator in accordance with another exemplary embodiment of the present invention;

FIGURE 3 is a schematic diagram of a chemical/biological agent sensor having a ring resonator in accordance with another exemplary embodiment of the present invention;

FIGURES 4A-D are schematic diagrams of a multiplexed chemical/biological agent sensor formed in accordance with an exemplary embodiment of the present invention; and

FIGURE 5 is a flow diagram of a method for sensing one or more chemical/biological agents in an environment in accordance with an exemplary embodiment of the present invention.

### DETAILED DESCRIPTION OF THE PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

Apparatus and method are provided for sensing one or more chemical/biological agents in an environment. In general, the apparatus includes more than one resonator, each having an optical fiber coil embedded with an indicator, that reacts to a predetermined chemical/biological agent. When an input light beam (e.g., from a light source) is supplied to the resonator and the input light beam is tuned to the resonance frequency of the optical fiber coil in one direction (e.g., a clockwise or a counter-clockwise direction of the optical fiber coil in the case of a ring resonator), a resonance lineshape is produced in the region of the resonance frequency, which is sensed by the light circulating through the resonator. With the agent to be detected absent from the environment, the resonance lineshape has a narrow profile corresponding to a low energy loss of the light circulating in the resonator. With the presence of the predetermined chemical/biological agent in the environment of the optical fiber coil, the indicator reacts with this agent and, as a result, a portion of the light circulating in the optical fiber coil is scattered or absorbed. The normally narrow, resonance lineshape changes to a wider, shallower profile. This change in resonance lineshape represents a greater energy loss resulting from the scattered light or absorbed light and thus, indicates the presence of the predetermined chemical/biological agent. Multiple resonators are multiplexed together in the sensor to simultaneously detect the presence of multiple chemical/biological agents. The additional resonators may also be used to sense other secondary materials, whose presence may adversely bias the measurement of the primary material that is intended to be detected. In this way, cross-sensitivities of one resonator coil or indicator to a secondary material may be eliminated. This provides a clearer measurement of the primary material or eliminates the possibility of a false alarm that is tripped by the secondary material. The additional resonators may also be used to sense the same chemical as the first resonator, as a form of redundancy to guard against false alarms, or to guard against the possibility of a failure in one resonator.

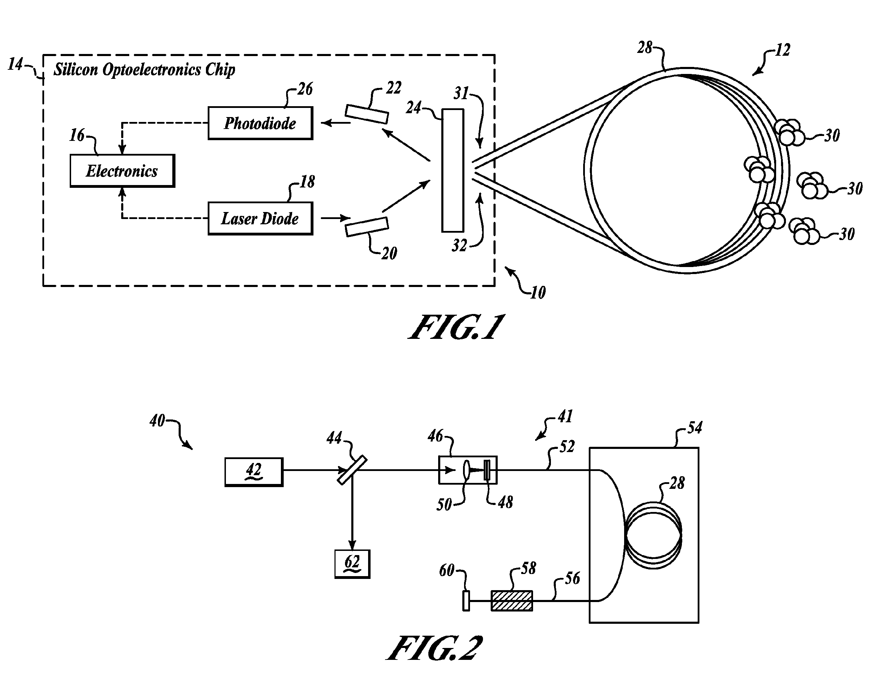

Referring now to the drawings, FIGURE 1 is a schematic diagram of a chemical/biological agent sensor 10 in accordance with an exemplary embodiment of the present invention. The sensor 10 includes a tunable light source 18 (e.g., an external cavity laser diode), a first mirror reflector 20, a recirculator 24 (e.g., a highly reflective mirror with low, but non-zero transmittance), an optical fiber coil 28 having a first end 31 receiving light from the light source 18 via the first mirror reflector 20 and recirculator 24, a second mirror reflector 22 receiving a light output from a second end 32 of the optical fiber coil 28 via the recirculator 24, a photodetector (e.g., a photodiode) 26, and an electronics module 16 coupled to the photodetector 26 and the light source 18. The recirculator 24 and the optical fiber coil 28 together form a resonator 12. The resonator 12 may have a variety of configurations, and some exemplary embodiments are described herein. The light introduced to the resonator 12 is monochromatic and circulates through multiple turns of the optical fiber coil 28 and for multiple passes through the coil 28 using the recirculator 24. Light output from the resonator 12 is responsive to the absence/presence of a predetermined chemical/biological agent 30.

In an exemplary embodiment, the light source 12 is a tunable laser having frequency stability, substantially narrow line width, and relatively high power capability. The light source 12 is tuned through a frequency region containing the frequency f₀ that corresponds with the resonance frequency in either the clockwise (CW) or counter-clockwise (CCW) direction of light propagation through the optical fiber coil 28. In general, the recirculator 24 may be any optical element that reintroduces light emerging from one end of the optical fiber coil 28 into the other end of the fiber coil 28, thus causing light to propagate through the optical fiber coil 28 many times. The use of an input mirror instead of a fiber optic coupler for the recirculator 24 is one advantage of the sensor 10, since the mirror may be used to attenuate polarization errors and other error mechanisms, and may introduce fewer imperfections; however, a fiber optic coupler may be used instead of the mirror and coupled to the fiber coil 28 via a splice.

In one case, the optical fiber coil 28 is made of fiber whose core is typically glass-based and with a cladding surrounding the core that is typically polymer-based and an indicator embedded in the cladding that reacts to a predetermined chemical/biological agent 30. Another type of fiber includes a glass core, a cladding of photonic crystalline structure, and an outer polymer based jacket. The indicator is contained within the outer jacket. In either case, an optical fiber having an extremely low bend loss is preferably used, and the optical fiber coil 28 preferably has a relatively large number of turns about a substantially small area. For example, the coil 28 may have from about 20-40 turns of the optical fiber about a one centimeter diameter. Generally, the longer the optical path, such as provided by the optical fiber coil 28, the greater the signal-to-noise ratio of the sensor 10. To improve the signal-to-noise ratio of the sensor 10, the optical path may be increased by increasing the number of turns of the optical fiber coil 28. In the optical fiber coil 28, light introduced by the recirculator 24 traverses mostly inside the core, and only about a few percent of the optical energy of light is contained outside the glass core of the optical fiber. The indicator may be a chemical or other substance that reacts to one or more chemical/biological substances (e.g., hydrogen sulfide, cyanide, chlorine, nerve agents, serin, and the like) and changes its optical characteristics, for instance color, optical loss, or index of refraction.

In operation, light produced by the light source 18 is directed to the first mirror reflector 20, which in turn directs this light to the recirculator 24. Light from the first mirror reflector 20 is scanned through the resonance frequency of the resonator 12, in a corresponding direction (e.g., the clockwise direction) of propagation, a first portion of which is transmitted through the recirculator 24 and into the first end 31 of the optical fiber coil 28. A second portion, i.e. the reflected portion, is reflected from the recirculator to mirror 22. The resonance frequencies for either of the CW and CCW paths through the optical fiber coil 28 are based on a constructive interference of successively circulated beams in each optical path. After the first portion of light propagates through the core of the optical fiber coil 28, the light emerges from the second end 32 of the optical fiber coil 28. In this exemplary embodiment, the light emerging from the second end 32 is directed to the recirculator 24. A portion of this light is reflected back into the first end 31 by the recirculator 24 while another portion is transmitted, i.e. the transmitted wave, by the recirculator 24 to the second mirror reflector 22. The transmitted wave is a fraction of, and derived from, the recirculating light wave inside the resonator. The transmitted wave and the reflected wave are directed, via the second mirror reflector 22 to the photodetector 26 where they are interfered. As the frequency of the light is detuned well away from resonance, the transmitted portion is very small and only the reflected portion impinges on the photodetector, indicating a maximum intensity, and very little destructive interference. As the frequency is scanned through the center of the resonance, the transmitted wave is maximized, producing maximum destructive interference with the reflected wave. Therefore, providing a resonance dip whose minima is indicative of the resonance center.

To observe the resonance center-frequency of the resonator 12, in either the CW direction or CCW direction (but shown for the CW direction), the intensity at the photodetector 26 may be measured or a standard synchronous detection technique may be used. In the case of synchronous detection, the input light beam is sinusoidally frequency modulated at a frequency (fₘ) to dither the input beam frequency across a resonance lineshape as measured by the photodetector 26. For example, the electronics module 16 may demodulate the output of the photodetector 26 at fₘ to measure resonance center indicated by the light output of the circulating light beam. At a line center of the resonance lineshape, or the resonance center, the photodetector 26 detects a minimum output at the fundamental detection frequency fₘ, and detects a maximum on either side of the lineshape where the slope of the lineshape is greatest. When the resonator is well off-resonance, an intensity signal maximum is observed, but the signal at fₘ is substantially zero. To observe the linewidth of the resonance lineshape, the laser frequency is scanned such that the light intensity signal on the photodetector 26 at least goes through a sequence of observing a half maximum, then the minimum, then another half maximum, all as the laser frequency is scanned monotonically. Alternatively, a second measure of the lineshape width may be measured by monitoring the frequency difference between maxima of the demodulated signal at fₘ, as the laser frequency is scanned montonically. In this case, a measurement of the frequency width of the resonance between points of highest slope is proportional to the resonator linewidth, and thus the loss of the resonator. The laser frequency excursion from half-maximum to half maximum (or between points of highest slope) is the resonator linewidth (or proportional to the resonator linewidth), which is indicative of the loss within the fiber coil 28, and hence, as measure of the presence of the chemical agent or chemical substance or biological substance. Widening of the linewidth represents the presence of the chemical agent or subject substance. The laser frequency excursion is measured by recording the laser frequency difference between the time that the detector observes on half-maximum signal and the time the detector observes the second half-maximum signal. The laser frequency at each of those two points in time may be measured directly or indirectly. One direct measure involves beating its frequency with another laser that is not being scanned and measuring the beat frequency difference between the two points in time. An indirect, and perhaps less expensive way is to precalibrate the laser frequency versus the electrical signal input used to scan the laser. This may be a current drive signal that changes the injection current of the laser, a current drive signal to a thermo-electric cooler that changes the temperature of the laser, or a voltage drive signal to a piezoelectric transducer that changes the pathlength of the laser cavity to change its frequency. In either of these cases, the laser frequency shift versus the drive signal can be factory-calibrated, and then the drive signal excursion is a measure of frequency excursion during operation.

When f₀ is tuned away from the resonance frequency of the resonator 12 in the CW direction, for example, the energy from the CW beam does not enter the optical fiber and the light is reflected off the highly reflective mirror of the recirculator 24 to produce a maximum intensity at the photodetector 26. When f₀ is tuned at the resonance frequency center of the resonator 12 in the CW direction, the CW beam enters the optical fiber coil 28, and the light striking the photodetector 26 has a minimum output thereby indicating the resonance center. Similarly, if the device were to inject light into the CCW direction instead, the CCW beam enters the optical fiber coil 28 when the CCW beam is tuned to the resonance frequency of the resonator 25 in the CCW direction.

When the chemical/biological agent 30 is in the presence of the optical fiber coil 28, the indicator embedded in the cladding of the optical fiber coil 28 reacts (e.g., binds) with the chemical/biological agent 30 and alters the optical properties of the optical fiber coil 28. For example, the altered optical properties of the optical fiber coil 28 include, but are not necessarily limited to, a change in the index of refraction or an increase or decrease in the optical absorbance or colorimetric properties of the optical fiber coil 28.

In an exemplary embodiment, the sensor 10 is constructed on a silicon-based micro-optical bench 14 that integrates electronics (e.g., the electronics module 16) and optics and provides an efficient and expedient interface between the two. Miniature optical components having a feature size of as little as 10 microns, such as the mirror reflectors 20, 22, and the recirculator 24, may be mounted on silicon surfaces to eliminate large bulk optics, even though the light wave may be traveling in free space. Some of these optical functions may also be embedded in waveguides residing in the silicon material. In this exemplary embodiment, the light source 18 and related frequency tuning components and the photodetector 26 may also be mounted on the optical bench. The use of these techniques allows the fabrication of optics in or on a silicon platform and thus integrated with the electronics. The light source itself may be a compound structure, on which several components may be mounted, or formed on the micro-optical bench 14. For instance, it may be an external cavity laser diode, where the laser diode is placed between two reflective surfaces which are either formed or placed on the substrate. There may also be frequency selective intra-cavity elements formed or placed within the laser cavity to make it a single frequency laser, such as a grating or an etalon. There may also be elements included with laser source 18 that are mounted or formed external to the laser cavity that are used to shape or collimate the laser beam, such as lenses.

FIGURE 2 is a schematic diagram of a chemical/biological agent sensor 40 having a linear resonator 41 in accordance with another exemplary embodiment of the present invention. The sensor 40 includes a tunable laser (e.g., a He-Ne laser, or an external cavity laser diode) 42 that synthesizes an input light beam and introduces the input light beam into the linear resonator 41. The sensor 40 includes a beam splitter (e.g., a 50-50% beam splitter) 44, an input element 46, the optical fiber coil 28, an output mirror 60, and a photodetector 62. The input element 46 includes, but is not necessarily limited to, an input mirror 48 (e.g., a 95.5% mirror) although a fiber grating may be substituted for the input mirror 48. Additionally, the input element 46 may include optics 50 for directing the light from the beam splitter 44 to a first end 52 of the optical fiber coil 28 and for directing light from the same end 52 of the optical fiber coil 28 to the beam splitter 44. The optical fiber coil 28 is housed in a permeable package 54 for detecting the predetermined chemical/biological agent (e.g., associated with the indicator embedded in the optical fiber coil 28). The linear resonator 41 is formed by the input mirror 48, fiber coil 28 and the output mirror 60. Mirrors 48 and 60 may be formed or deposited directly onto the fiber tips or fiber ends 52 and 56 to achieve a low loss resonator.

A modulator (e.g., a piezoelectric transducer) 58 may be coupled to the optical fiber coil 28 to modulate the pathlength of the light (e.g., sinusoidal modulation) circulating through the optical fiber coil 28 during resonance linewidth determination so that synchronous detection may be used. For example, the input light beam produced by the laser 42 is scanned through the resonance frequency f₀ of the resonator and the modulator 58 sinusoidally modulates the pathlength of the light circulating through the optical fiber coil 28. In another exemplary embodiment, the modulator 58 is omitted when the laser 42 has frequency modulation capabilities incorporated therewith. In a third exemplary embodiment, the laser frequency is fixed, and both the frequency scanning and the modulation are effected by the modulator 58. In this latter case, the resonator resonance frequency is scanned through the region of the laser frequency, which is equivalent, in principle, to scanning the laser frequency across a fixed resonance frequency of the fiber resonator.

The input light beam from the laser 42 is directed by the beam splitter 44 to the input element 46 which directs the input light beam to the first end 52 of the optical fiber coil 28. When tuned to the resonance frequency associated with the resonator 41, containing the optical fiber coil 28, a majority of the input light beam enters the optical fiber coil 28. After propagating through the optical fiber coil 28, light emerges from the second end 56 of the optical fiber coil 28 and impinges on the output mirror 60 which reflects the light back into the optical fiber coil 28 at the second end 56. A light output is produced from the light propagating back and forth in the optical fiber coil 28 at the first end 52 of the optical fiber coil 28 which is directed by the input element 46 to the beam splitter 44. The beam splitter 44 reflects a portion of the light output to the photodetector 62, which may be coupled to electronics (similar to FIGURE 1).

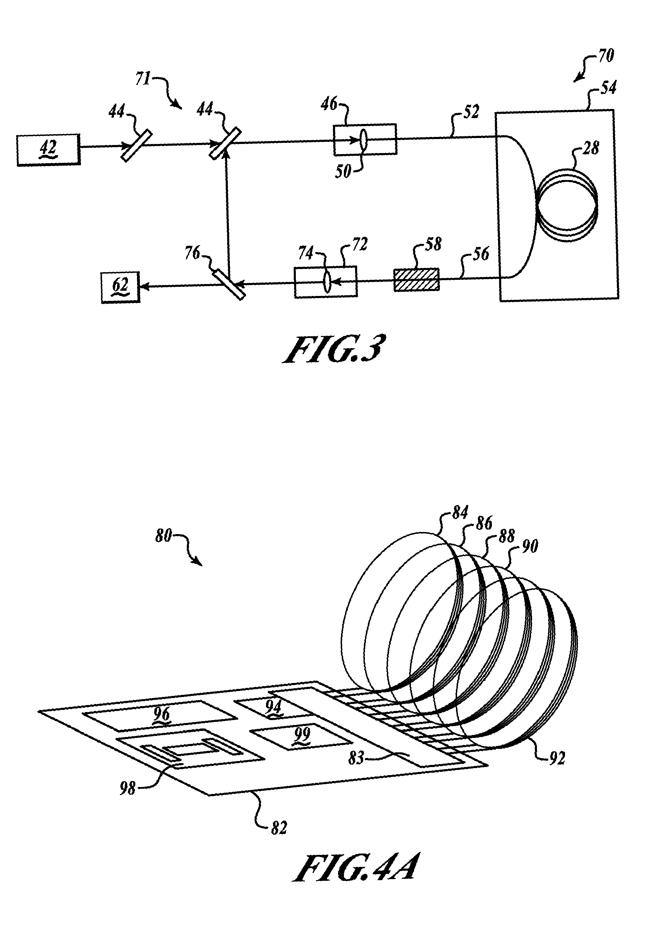

FIGURE 3 is a schematic diagram of a chemical/biological agent sensor 70 having a ring resonator 71 in accordance with another exemplary embodiment of the present invention. In this exemplary embodiment, the laser 42 introduces the input light beam into the ring resonator 71. The chemical/biological agent sensor 70 includes the laser 42, the beam splitter 44, the input mirror 48, the input element 46, the optical fiber coil 28, an output element 72, an output mirror 76, and the photodetector 62. The optical fiber coil 28 is housed in the permeable or semi-open package 54, and the modulator (e.g., a piezoelectric transducer) 58 may be coupled to the optical fiber coil 28 to modulate the light path (e.g., sinusoidal modulation and/or resonance frequency scanning) circulating through the optical fiber coil 28 during resonance linewidth determination. The resonator includes, mirrors 48 and 76, the fiber coil 28, the input element 46 and the output element 72. In another embodiment, mirrors 48 and 76 are designed with sufficient curvature to eliminate the input element 46 and the output element 72. In yet another embodiment the two mirrors 48 and 76 and the input element 46 and the output element 72 are replaced with a fiber optic coupler which is spliced to the coil 28. In yet another embodiment, the two mirrors 48 and 76 and the input element 46 and the output element 72 are replaced with two fiber optic couplers which are spliced together and then spliced to the coil 28.

The input light beam from the laser 42 is directed to the input mirror 48 which transmits a portion of the input light beam to the input element 46. The input element 46 directs light from the input mirror 48 to the first end 52 of the optical fiber coil 28. When tuned to the resonance frequency of the resonator, a majority of the input light beam enters the first end 52 of the optical fiber coil 28. After propagating through the optical fiber coil 28, light emerges from the second end 56 of the optical fiber coil 28 and is directed to the output element 72. The output element 72 may include optics 74 for directing light from the second end 56 of the optical fiber coil 28 to the output mirror 76. The output mirror 76 reflects the light from the output element 72 to the input mirror 48, and input mirror 48 directs a majority of this to the input element 46 to complete the resonator optical path. A light output is produced from the light circulating around the optical path, including the optical fiber coil 28, at the output mirror 76, which passes a small fraction of the light that is circulated within the resonator out to the photodetector 62.

FIGURE 4A is a schematic diagram of a multiplexed chemical/biological agent sensor 80 in accordance with another exemplary embodiment of the present invention. The sensor 80 includes a silicon-based micro-optical bench 82 and a multiple optical fiber coils 84, 86, 88, 90, 92 coupled to the micro-optical bench 82. The micro-optical bench 82 integrates electronics (e.g., the electronics module 16 shown in FIGURE 1) and optics (e.g., the beam splitter 44, input and output mirrors 48, 60, 76, input and output elements 46, 72, and the photodetector 62 shown in FIGURES 2 and 3). For example, the electronics module 16, the photodetector 26, the light source 18, the mirror reflectors 20, 22, and the recirculator 24 shown in FIGURE 1 may be integrated with the micro-optical bench 82. The sensor 80 additionally includes, but is not necessarily limited to, an optical multiplexing circuit 83 formed on the micro-optical bench 82 that is coupled (e.g., via one or more fiber vee-grooves and/or input mirrors) to each of the optical fiber coils 84, 86, 88, 90, 92.

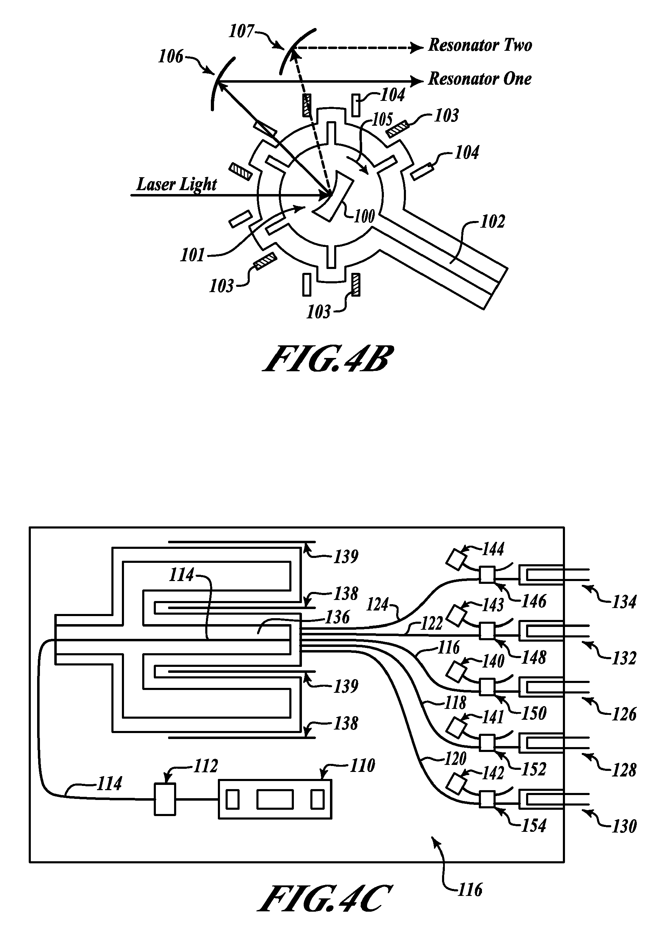

The laser light from laser 98 is time-division-multiplexed between the coils 84-92 via the optical multiplexing circuit 83 formed in or on the chip (bench 82). The optical multiplexing circuit 83 is a series of optical elements that are capable of directing light energy from the laser 98 into one or more resonators at one time and varying in time which coils are excited with light. The optical circuit also is capable of selecting a light output or light outputs from the resonators to a photodetector 94 located on the bench 82. The photodetector 94 receives light as the laser frequency is scanned for determining the resonance centers of resonators in a manner described in preceding paragraphs. In one embodiment of the optical multiplexing circuit 83, a mirror mounted on a movable micro-electromechanical structure may be used to steer the laser beam from one receiving mirror to the next, each of which in turn couples the light to a distinct resonator. At the same time, light reflected from the selected resonator is directed to the photodetector 94. One embodiment of this using a movable mirror 100 is shown in FIGURE 4B, where the optical multiplexing circuit 83 includes a movable mirror 100 mounted on a structure 101 that pivots. The structure 101 is suspended from the silicon substrate via a flexible member 102 that allows the structure 101 to pivot when subjected to electrostatic forces as a voltage is applied across surrounding electrode fingers 103 and 104, causing a rotation shown by the arrow 105. Laser light, which was initially reflected off mirror 100 to receiving mirror 106, is then redirected to a receiving mirror 107. Each receiving mirror is then oriented toward coupling light into a specific resonator.

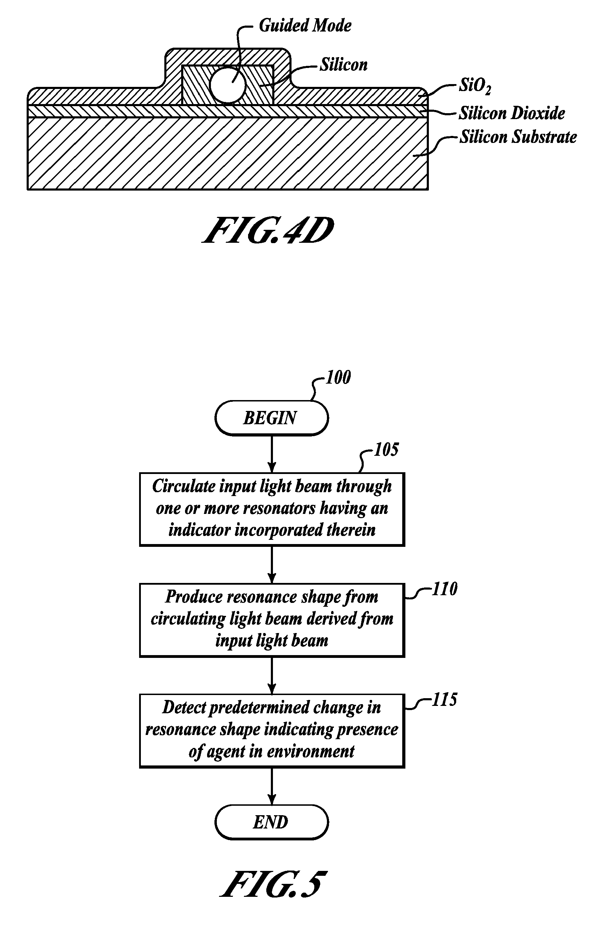

Another embodiment, shown in FIGURE 4C, the laser light is coupled from a laser via a coupling device 112 into a waveguide (source waveguide) 114 formed on or within the silicon substrate 116. The source waveguide 114 conducts the light and then couples it to one of a series of other receiving waveguides 116, 118, 120, 122, 124 via mechanical movement so that only a single receiving waveguide (receiving waveguide 116 is shown in FIGURE 3C) catches the light from the source waveguide and directs the light to the tip of a single fiber resonator, which is a fiber tip 126. The resonator shown here for illustration is a linear resonator constructed of chemically sensitive fiber as shown in FIGURE 2, but alternative resonators may be used. The source waveguide 114 is located on a movable MEMS structure 136 that may be moved via electrostatic force by applying voltage across electrodes 138 and 139. As voltage is applied across the electrodes 138 and 139, the receiving waveguide 116-124 that is positioned to receive light from the tip of source waveguide 114 will change, for example from receiving waveguide 116 to receiving waveguide 118. In this case the light is then conducted to the tip of a fiber 128 that is part of a different resonator than in which the fiber tip 126 is part of. In the simplest case, the source receiving waveguides are systematically moved so that only one receiving waveguide and one resonator is interrogated by the light at a time. Also, each resonator has a dedicated detector 140, 141, 142, 143, or 144 for receiving light from that resonator when light is emitted from it as in FIGURE 2. The beamsplitter 44 of FIGURE 2 is replaced by a waveguide coupler 146, 148, 150, 152, 154 in FIGURE 4C. The cross-section of a typical silicon waveguide is shown in FIGURE 4D, where the guided mode is contained in a channel waveguide of silicon formed on top of a silicon dioxide layer, which is on a silicon substrate. A silicon dioxide layer may be placed over the silicon channel, or in some cases air may be used.

Other embodiments using a single detector are possible in the same way the light source is multiplexed; i.e., by incorporating a waveguide (i.e detector waveguide) similar to that of waveguide 114 that is coupled to a single detector. In this case the detector waveguide is located on a second movable member that position it to receive light from the resonator that is being interrogated by the light source. Thus, the detector waveguide is simultaneously positioned to receive light from the resonator of choice as the light source waveguide is moved to excite the resonator of choice. In this way, only one laser and detector are used, but very little light is lost. Hence, there are series of receiving waveguides, one per coil, that are arranged to receive light from the coil and provide it to a detector. There may be one detector per coil, or to minimize cost, size and power a single detector is used. In that case, the receiving waveguides may be arranged such that only one receiving waveguide interfaces directly to a unique resonator, but a movable detector waveguide is coupled to the single detector. The detector waveguide is moved such that it optically couples to the receiving waveguide of the resonator that is excited with light at the time. Thus, the detector only receives light that has traveled through a single coil at any one time. The receiving waveguides and the detector waveguide may again be arranged so that they move relative to each other via a mechanical actuation. This may be done by providing MEMS-type movable members on the chip, small members that move relative to each other via electromagnetic inputs. The optical waveguides are thus moved relative to each other via an electrical control signal provided by a processor 96. The control signal is also used as a reference by the processor 96 to interpret the photodetector signal, providing knowledge of which coil the light signal has traveled through and is impinging on the photodetector. Thus, the sensor system is able to determine which substance may be present. Example mechanical actuation systems that could be used for moving waveguides is made by Gemfire Corporation in San Jose, California. FIGURE 4A also shows an optical conditioning element 99 that may, in some circumstances, be placed between the light source 98 and the optical multiplexing circuit 83. The optical conditioning element 99 may be used for the purposes of conditioning the light wave including focusing it, polarizing it, and directing it to the optical multiplexing circuit 83. Thus, it may contain a lensing element, a polarizer, and a mirror, respectively. It may also contain an optical isolator using a Faraday isolator to ensure the laser's performance in case of optical feedback in the direction toward the laser 98. As shown in FIGURE 4C, light in the waveguide 114 may be split into more than one source waveguide, allowing more than one receiving waveguide to receive light at a given time.

In an exemplary embodiment, the waveguide 83 directs input light beams to one of the optical fiber coils 84, 86, 88, 90, 92 at a time and receives output light beams from the optical fiber coils 84, 86, 88, 90, 92 at a time after having circulated through each of the optical fiber coils 84, 86, 88, 90, 92. The output light beams are each directed to one or more input mirrors to produce a light output, from which a resonance lineshape may be determined, and may be directed back to the corresponding optical fiber coil to complete a resonator optical path. The input light beams are each scanned across to the resonance frequency of the corresponding optical fiber coil 84, 86, 88, 90, 92. As previously described, this may be accomplished by having a fixed average input light frequency and scanning the length of each of the resonator pathlengths, thus scanning through the resonance lineshape. Each of the optical fiber coils has an indicator embedded therein that reacts to a different chemical/biological agent. In another exemplary embodiment, one of the optical fiber coils (e.g., the optical fiber coil 92) is embedded with a dopant that darkens when irradiated with nuclear radiation. A change in the resonance lineshape width associated with the light output of a particular optical fiber coil 84, 86, 88, 90, 92 indicates the presence of the corresponding chemical/biological agent or the presence of nuclear radiation. Using the sensor 80, multiple chemical/biological agents and nuclear radiation may be detected using a single device with a common output interface and possibly a wireless transmitter.

FIGURE 5 is a flow diagram of a method 100 for sensing one or more agents in an environment in accordance with another exemplary embodiment of the present invention. An input light beam is circulated through at least one optical fiber coil (e.g., the optical fiber coils 84, 86, 88, 90, 92 shown in FIGURE 4A), as indicated at block 105. Each of the optical fiber coils has an indicator incorporated therein that reacts with a different agent (e.g., chemical/biological agent) or has a dopant that darkens with nuclear radiation. In one exemplary embodiment, a first light beam is circulated through a first optical fiber coil and a second light beam is circulated through a second optical fiber coil. The first optical fiber coil has a first indicator embedded therein that reacts with a first agent (e.g., serin), and the second optical fiber coil has a dopant that darkens with nuclear radiation. In another exemplary embodiment, light is directed into the first end of the optical fiber coil and emerges from the second end of the optical fiber coil where the light is reflected back into the second end of the first optical fiber coil, such as via output mirror 60 shown in FIGURE 2. A portion of the light emerging from the first end of the optical fiber coil is directed back into the first end of the optical fiber coil, such as via input mirror 48 shown in FIGURE 2. In yet another exemplary embodiment, light is directed into the first end of the optical fiber coil by an input mirror and emerges from the second end of the optical fiber coil where the light is received by an optical element (e.g., the output element 72 shown in FIGURE 3). The optical element directs the light emerging from the second end of the optical fiber coil to an output mirror (e.g., the output mirror 76 shown in FIGURE 3), and the output mirror reflects the light from the optical element to the input mirror. The input mirror directs a portion of the light from the output mirror into the first end of the first optical fiber coil.

A resonance shape is produced from a circulating light beam derived from the input light beam, as indicated at block 110. When determining the resonance lineshape from the light circulating in the optical fiber coil, the input light beam is scanned across the resonance lineshape of the resonator containing the sensitive optical fiber coil. A predetermined change in the resonance shape is detected, as indicated at block 115. The change may be a predetermined amount of energy loss represented in the resonance lineshape. The predetermined change indicates the presence of the agent in the environment.

## Claims

1. An apparatus for sensing one or more agents in an environment, the system comprising:
a light source configured to produce a first light beam;
a controller capable of changing the path of said first light beam based on an electrical signal;
a first and second resonator each capable of receiving light from said controller, said first and second resonators each comprising an optical fiber coil, said first and second resonators each configured to circulate a resonator light beam when said light is received from the said controller;
at least one photodetector in optical communication with said first and second resonators; and
a processor in signal communication with at least one of the photodetectors and said controller, the processor configured to determine if one of one or more agents are present in the environment based on signals received from the two or more the photodetectors.

2. The apparatus of Claim 1, wherein said controller includes a first waveguide and first and second receiving waveguides wherein the controller is configured to control position of said first waveguide, said first receiving waveguide being capable of receiving light from said first waveguide when said first waveguide is positioned in a first predetermined position by the controller and said second receiving waveguide capable of receiving light from said first waveguide when said first waveguide is positioned in a second predetermined position by the controller.

3. The apparatus of Claim 2, wherein said controller includes a mechanical actuator, said first waveguide is at least one of mounted on, or formed on, the mechanical actuator configured to mechanically control position of said first waveguide based on a control signal, wherein said first optical fiber coil of said first optical resonator comprises a first cladding and a first indicator embedded in the first cladding, the first indicator configured to react to a first agent of the two or more agents, and wherein said second optical fiber coil of said second resonator comprises a second cladding and a second indicator embedded in the second cladding, the second indicator configured to react to a second agent of the two or more agents.

4. The apparatus of Claim 2, further comprising:
at least one more receiving waveguide capable of receiving light from said first waveguide when said first waveguide is positioned in a predetermined position different than said first and second predetermined positions; and
another resonator that is different than said first and second resonators, the other resonator being in optical communication with said at least one more receiving waveguide,
wherein said optical fiber coil of said first optical resonator comprises at least one of a dopant or a substance configured to darken when subjected to nuclear radiation.

5. The apparatus of Claim 2, wherein said optical fiber coil of said first optical resonator comprises at least one of a dopant or a substance configured to darken when subjected to nuclear radiation.

6. The apparatus of Claim 1, wherein the controller comprises:
a first reflector in optical communication with the light source;
a reflector controller configured to control orientation of said first reflector;
a first receiving reflector capable of receiving light from first reflector when said first reflector is oriented in a first predetermined orientation; and
a second receiving reflector capable of receiving light from first reflector when said first reflector is oriented in a second predetermined orientation,
wherein the first and second receiving reflectors are capable of receiving light from the first and second resonators, respectively, wherein the controller comprises a mechanical actuator, wherein said first reflector is at least one of mounted on, or formed on said mechanical actuator that mechanically controls orientation of said first reflector based on a control signal received from the reflector controller, wherein said optical fiber coil of said first optical resonator comprises a first cladding and a first indicator embedded in the first cladding, the first indicator configured to react to a first agent of the two or more agents, wherein said optical fiber coil of said second resonator comprises a second cladding and a second indicator embedded in the second cladding, the second indicator configured to react to a second agent of the two or more agents and wherein said optical fiber coil of said first optical resonator comprises at least one of a dopant or a substance configured to darken when subjected to nuclear radiation,
wherein the controller comprises:
at least one more receiving reflector capable of receiving light from said first reflector when said first reflector is oriented in a predetermined orientation different than said first and second predetermined orientations; and
another resonator that is different than said first and second resonator, the other resonator capable of receiving light from with said at least one more receiving reflector.

7. The apparatus of Claim 6, wherein said controller includes:
a second reflector in optical communication with the at least one photodectector;
a second reflector controller configured to control orientation of said second reflector;
a first resonator output reflector capable of transmitting light to said second reflector when said second reflector is oriented in a first predetermined orientation;
a second resonator output reflector capable of transmitting light to said second reflector when said second reflector is oriented in a second predetermined orientation;
at least one more receiving reflector capable of receiving light from said first reflector when said first reflector is oriented in a predetermined orientation different than said first and second predetermined orientations; and
a resonator that is different than said first and second resonator, the resonator being capable of receiving light from said at least one more receiving reflector,
wherein said first and second resonators are capable of being in optical communication with the said first and second resonator output reflectors respectively,
further comprising a mechanical actuator wherein said second reflector is at least one of mounted on, or formed on, said mechanical actuator configured to mechanically control orientation of said second reflector based on a control signal received from said second reflector controller,
wherein said optical fiber coil of said first optical resonator comprises a first cladding and a first indicator embedded in the first cladding, the first indicator configured to react to a first agent of the two or more agents, and wherein said optical fiber coil of said second resonator comprises a second cladding and a second indicator embedded in the second cladding, the second indicator configured to react to a second agent of the two or more agents, wherein said optical fiber coil of said first optical resonator comprises at least one of a dopant or a substance configured to darken when subjected to nuclear radiation, and wherein said optical fiber coil of said first optical resonator comprises at least one of a dopant or a substance configured to darken when subjected to nuclear radiation.

8. The apparatus of Claim 2, further comprising:
a second waveguide in optical communication with the at least one photodectector;
a second controller configured to control position of said second waveguide;
a first resonator output waveguide capable of transmitting light to said second waveguide when said second waveguide is positioned in a first predetermined position by the second controller; and
a second resonator output waveguide capable of transmitting light to said second waveguide when said second waveguide is positioned in a second predetermined position by the second controller,
wherein said first and second resonator are capable of being in optical communication with said first and second resonator output waveguides respectively, wherein said controller includes a mechanical actuator, said first waveguide is at least one of mounted on, or formed on said mechanical actuator that mechanically controls position of said first waveguide based on a control signal, and wherein said optical fiber coil of said first optical resonator comprises at least one of a dopant or a substance configured to darken when subjected to nuclear radiation.

9. The apparatus of Claim 8, wherein said optical fiber coil of said first optical resonator comprises a first cladding and a first indicator embedded in the first cladding, the first indicator configured to react to a first agent of the two or more agents, and wherein said optical fiber coil of said second resonator comprises a second cladding and a second indicator embedded in the second cladding, the second indicator configured to react to a second agent of the two or more agents.

10. The apparatus of Claim 8, further comprising:
at least one more receiving waveguide capable of receiving light from said first waveguide when said first waveguide is positioned in a predetermined position different than said first and second predetermined positions; and
a resonator that is different than said first and second resonator, the resonator capable of receiving light from each of said at least one more receiving waveguides,
wherein said optical fiber coil of said first optical resonator comprises at least one of a dopant or a substance configured to darken when subjected to nuclear radiation.
